# EUROPEAN PATENT APPLICATION

(11) **EP 4 583 337 A1**
(43) Date of publication of application: **09.07.2025**
(21) Application number: 24167470.4
(22) Date of filing: 28.03.2024
(51) Int. Cl.: H02G 9/02, H02G 9/04, H02G 3/04, E02B 3/20

(54) **180 DEGREE LAY FLAT MULTI DIRECTIONAL LIFT ASSIST COVER FOR A TRENCH OF A CABLE MANAGEMENT SYSTEM**

(30) Priority: 05.01.2024 US 202418405879
(71) Applicant: Dabico Airport Solutions Inc., Indianapolis 46241 (US)
(72) Inventor: McNeil, William M., Lakewood, 90712 (US); Simmons, Don, Burleson, 76028 (US)
(74) Representative: Leffers, Thomas

(57) **Abstract**

The present invention relates to a cover for a trench of a cable management system, wherein the cover comprises a cover plate, wherein the cover plate is configured in such a way, that the cover plate fully covers the trench, and wherein the cover further comprises at least one spring assisted hinge, wherein the at least one spring assisted hinge is fixed to the cover plate at one end of the cover plate, and wherein the at least one spring assisted hinge is configured in such a way, that the cover can be attached to the trench by the at least one spring assisted hinge in an openable manner.

## Description

The present invention relates to a 180 degree lay flat multi directional lift assist cover for a trench cable management system, and in particular to a cover for a trench of a cable management system for onshore power systems.

A ship, for example a cruise ship, needs considerable electric power, also when it is lying in a port. This power is generally of the order of several megawatts, typically 8 to 12 megawatts for three-phase voltages of 6 500 V or 11 000 V and is generally provided by on-board diesel generating units. These on-board generators have low yield, use costly energy and are highly polluting.

In order to save costs and to reduce pollution, onshore power systems, respectively Shoreside Electricity (SSE) systems, Alternative Maritime Power (AMP) systems, High-Voltage Shore Connection (HSCV) systems, or Cold Ironing systems have been developed, wherein external power is provided to the ship, respectively via cables plugged into an onshore power supply.

US 2013/341144 A1 discloses a power supply device for a ship stationed on a mooring of a harbor, which includes a land-based, horizontally displaceable carriage, on which a power supply line with a plug is disposed for supplying the ship with electrical energy. The power supply line can be electrically connected to a land-based power supply network. A plug-side section of the power supply line is disposed in a vertically displaceable manner on the carriage.

It is known to supply energy from an onshore power supply to a ship, respectively via a horizontally displaceable carriage or vehicle that is electrically connected to the ship via cables, wherein these cables are routed through a cable management and shore power system, respectively through a corresponding underground cable canal. To provide full cable protection and protection from spillage respectively debris, such a canal is usually covered by a cover system, which comprises at least one cover. In particular, such a canal is usually divided into a plurality of subsequent parts, respectively trenches, wherein each of these trenches is covered by a separate cover.

Therein, if the corresponding horizontally displaceable carriage or vehicle is placed above one of these trenches due to the dimensions of the corresponding ship, the corresponding cover has to be manually opened first in order to be able to correspondingly access the cable management system, and wherein usually a huge effort is necessary to manually open the cover. Additionally, increased labor and additional equipment, in particular a forklift is required during this process. Therefore, there is a need for an improved cover for a trench of a cable management system with which this effort can be reduced.

Therefore, it is an object of the present application to provide an improved cover for a trench of a cable management system.

This object is solved by the cover for a trench of a cable management system according to claim 1.

According to one embodiment of the present invention, this object is solved by a cover for a trench of a cable management system, wherein the cover comprises a cover plate, wherein the cover plate is configured in such a way, that the cover plate can fully cover the trench, and wherein the cover further comprises at least one spring assisted hinge, wherein the at least one spring assisted hinge is fixed to the cover plate at one end of the cover plate, and wherein the at least one spring assisted hinge is configured in such a way, that the cover can be attached to the trench by the at least one spring assisted hinge in an openable manner.

Here, a cover plate is a removeable, respectively openable plate that is designed to cover the trench. That the cover plate is configured to fully cover the trench means that the dimensions of the cover plate are chosen in such a way, that they are equal to the dimensions of a corresponding opening of the trench.

Further, a spring assisted hinge is a hinge that is fitted with a spring, wherein spring assisted hinges are for example used to make doors to open, respectively close and almost automatically, respectively in a much lighter way. That the at least one spring assisted hinge is fixed to the cover plate at one end of the cover plate means that the at least one spring assisted hinge is fixed to the cover plate in such a way, respectively such a position, that the cover can be attached to the trench by the at least one spring assisted hinge in an openable manner.

Such a cover has the advantage that the force required to correspondingly open the cover can be significantly reduced. Further, that the dimensions of the cover plate are chosen in such a way, that they are equal to the dimensions of a corresponding opening of the trench, has the advantage that operational safety, respectively full cable protection, low maintenance, and protection from spillage and debris can be provided.

Therefore, an improved cover for a trench of a cable management system is provided.

In one embodiment, the at least one spring assisted hinge is configured in such a way, that the cover can be attached to the trench by the at least one spring assisted hinge in a manner that it can be opened to 180°.

That the cover can be opened to 180° means that the cover can be opened multidirectional, respectively in such a way, that the cover plate can be flipped and laid flat on the ground, for example a wharf, when the trench is opened.

Thereby, it can be ensured that corresponding requirements, respectively restrictions due to the clearance requirements regarding the moveable carriage, respectively vehicle clearance requirements are met.

Further, the at least one spring assisted hinge can comprise at least one torsion spring.

Here a torsion spring is a spring that works by twisting its end along its axis.

Therein, torsion springs have, among others, the advantage that they are durable and last for a long time, easy to use and can be adjusted easily, and are small.

Also, the at least one spring assisted hinge can comprises at least a first spring and a second spring, wherein the first spring has a different load rating than the second spring.

Here, the load rating of a spring describes a certain amount of force or pressure at the desired loaded height. Therein, the different load ratings can for example depend on the distance from the load of the cover to the pivot point of the corresponding spring.

Thereby, the cover can be optimally fitted to different cable management system designs or different port designs.

The cover can further comprise an additional locking mechanism to lock the cover plate.

Here, a locking mechanism is a system, usually a mechanical system which provides assistance to the coupling and uncoupling of two connectors and the fixation of the two parts in operating position.

Thereby, additional security can be provided. In particular, it can be ensured that the cover cannot be opened by an unauthorized person.

According to another embodiment of the invention, a cable management and shore power system is provided, wherein the cable management system comprises at least one trench and at least one system as described above.

Therefore, a cable management and shore power system that comprises an improved cover for a trench of a cable management system is provided. The cover has the advantage that the force required to correspondingly open the cover can be significantly reduced, in particular to less than 25lbs of force. Further, that the dimensions of the cover plate are chosen in such a way, that they are equal to the dimensions of a corresponding opening of the trench, has the advantage that operational safety, respectively full cable protection, low maintenance, and protection from spillage and debris can be provided.

Therein, the cable management and shore power system is a cable management system of an onshore power system. Especially regarding onshore power systems, it is advantageous to significantly reduce the force required to correspondingly open the cover and, at the same time, to provide operational safety, respectively full cable protection, low maintenance, and protection from spillage and debris.

According to still another embodiment of the invention, an onshore power system is provided, which comprises a onshore power supply, a cable management system, respectively a cable management and shore power system as described above and a land-based, horizontally displaceable vehicle, on which a power supply line with a plug is disposed for supplying a ship with electrical energy, and wherein electric power from the power supply is supplied to the vehicle through the cable management and shore power system and the vehicle.

Therefore, an onshore power system with a cable management and shore power system that comprises an improved cover for a trench of a cable management system is provided. The cover has the advantage that the force required to correspondingly open the cover can be significantly reduced in particular to less than 25lbs of force. Further, that the dimensions of the cover plate are chosen in such a way, that they are equal to the dimensions of a corresponding opening of the trench, has the advantage that operational safety, respectively full cable protection, low maintenance, and protection from spillage and debris can be provided.

The invention will now be described in further detail with respect to the attached drawings.
- Fig. 1.: Illustrates a cover for a trench of a cable management system according to embodiments of the invention;
- Fig. 2.: Illustrates a cable management and shore power system according to embodiments of the invention.

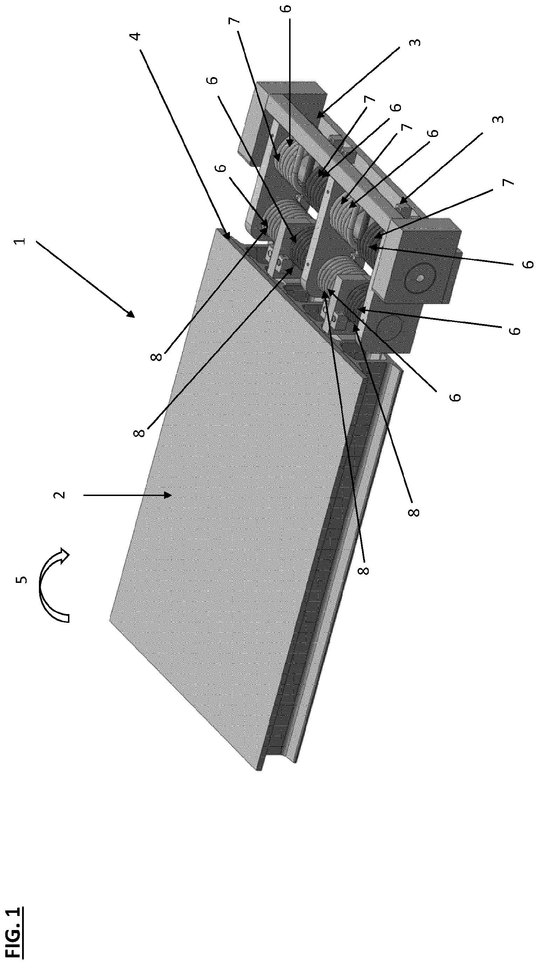

Fig. 1 illustrates a cover for a trench of a cable management system 1 according to embodiments of the invention.

A ship, for example a cruise ship, needs considerable electric power, also when it is lying in a port. This power is generally of the order of several megawatts, typically 8 to 12 megawatts for three-phase voltages of 6 500 V or 11 000 V and is generally provided by on-board diesel generating units. These on-board generators have low yield, use costly energy and are highly polluting.

In order to save costs and to reduce pollution, onshore power systems, respectively Shoreside Electricity (SSE) systems, Alternative Maritime Power (AMP) systems, High-Voltage Shore Connection (HSCV) systems, or Cold Ironing systems have been developed, wherein external power is provided to the ship, respectively via cables plugged into an onshore power supply.

It is known to supply energy from an onshore power supply to a ship, respectively via a horizontally displaceable carriage or vehicle that is electrically connected to the ship via cables, wherein these cables are routed through a cable management and shore power system, respectively through a corresponding underground cable canal. To provide full cable protection and protection from spillage respectively debris, such a canal is usually covered by a cover system, which comprises at least one cover. In particular, such a canal is usually divided into a plurality of subsequent parts, respectively trenches, wherein each of these trenches is covered by a separate cover.

Therein, if the corresponding horizontally displaceable carriage or vehicle is placed above one of these trenches due to the dimensions of the corresponding ship, the corresponding cover has to be manually opened first in order to be able to correspondingly access the cable management system, and wherein usually a huge effort is necessary to manually open the cover. Therefore, there is a need for an improved cover for a trench of a cable management system with which this effort can be reduced.

The cover shown in Fig. 1 comprises a cover plate 2, wherein the cover plate 2 is configured in such a way, that the cover plate 2 can fully cover the trench, and wherein the cover 1 further comprises two spring assisted hinges 3, wherein the spring assisted hinges 3 are fixed to the cover plate 2 at one end 4 of the cover plate 2, and wherein the spring assisted hinges 3 are configured in such a way, that the cover 1 can be attached to the trench by the spring assisted hinge 3 in an openable manner.

Such a cover 1 has the advantage that the force required to correspondingly open the cover can be significantly reduced, in particular to less than 25lbs of force. Further, that the dimensions of the cover plate 2 are chosen in such a way, that they are equal to the dimensions of a corresponding opening of the trench, has the advantage that operational safety, respectively full cable protection, low maintenance, and protection from spillage and debris can be provided.

Therefore, an improved cover for a trench of a cable management system 1 is provided.

In particular, the cover 1 can for example be designed in such a way, that less than 25lbs, respectively only approximately 11kg of lift force are required to open, respectively close the cover, respectively the cover plate, wherein the cover plate 2 is usually made of steel. The direction in which the cover can be opened is symbolized by arrow 5 in Fig. 1, wherein the cover can be closed in the opposite direction.

Therein, the at least one spring assisted hinge is fixed to the cover plate close to a side wall of the cover plate in such a way, that the cover can be attached to the trench by the at least one spring assisted hinge in an openable manner.

According to the embodiments of Fig. 1, further a flat cover 1 is provided.

In particular, according to the embodiments of Fig. 1, the spring assisted hinges 3 are configured in such a way, that the cover 1 can be attached to the trench by the spring assisted hinges 3 in a manner that it can be opened to 180°.

The shown spring assisted hinges 3 further respectively comprise torsion springs 6, wherein each of these springs 6 can be formed in a different way based on actual restrictions, respectively actual requirements.

In particular, the two spring assisted hinges 3 respectively comprise at least a first spring 7 and a second spring 8, wherein the first spring 7 has a different load rating than the second spring 8. Therein, the size of each spring can be smaller allowing to stay within imposed requirements, respectively restrictions imposed.

As shown in Fig. 1, according to the embodiments of Fig. 1 there are eight springs. Therein, respectively one spring of the first 7, respectively second springs 8 is made to work in one direction and the other spring of the first 7, respectively second springs 8, which is a mirror image of the first, wherein both springs work in tandem to provide the needed force.

The shown cover 1 can further comprise an additional locking mechanism to lock the cover plate 2.

In particular, the cover 1 can comprise an optional additional locking mechanism which must first be unlocked to release the cover prior to opening, respectively rotating the cover 1.

The optional additional locking mechanism can for example comprise a tabbing system, Kirk keys, or mag locks.

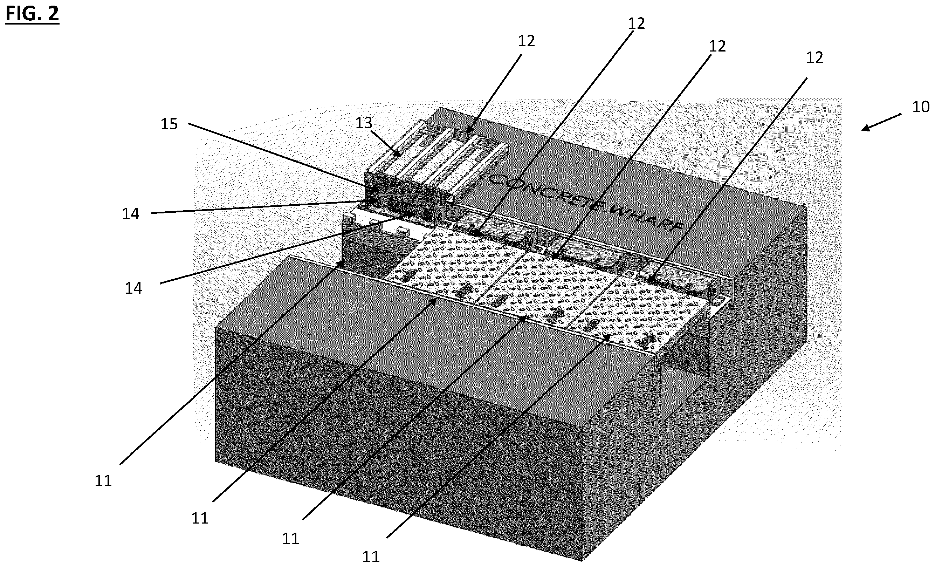

Fig. 2 illustrates a cable management and shore power system 10 according to embodiments of the invention.

As shown in Fig. 2, the cable management and shore power system 10 comprises a plurality of trenches 11 and a cover system which comprises a plurality of covers 12.

According to the embodiments of Fig. 2, each of the covers 12 again comprises a cover plate 13, wherein the cover plate 13 is configured in such a way, that the cover plate 13 can fully cover the corresponding trench 11, and wherein the cover 12 further comprises at least one spring assisted hinge 14, wherein the at least one spring assisted hinge 14 is fixed to the cover plate 13 at one end 15 of the cover plate 13, and wherein the at least one spring assisted hinge 14 is configured in such a way, that the cover 12 can be attached to the corresponding trench 11 by the at least one spring assisted hinge 14 in an openable manner.

According to the embodiments of Fig. 2, the cable management system 10 is a cable management system of an onshore power system.

In particular, the shown cable management system 10 is designed to provide personal and equipment access and the vehicle clearance requirements necessary to pass over the cable management system trench covers 12 to the shore power electrification point.

## Claims

1. Cover for a trench of a cable management system, wherein the cover comprises a cover plate, wherein the cover plate is configured in such a way, that the cover plate can fully cover the trench, and wherein the cover further comprises at least one spring assisted hinge, wherein the at least one spring assisted hinge is fixed to the cover plate at one end of the cover plate, and wherein the at least one spring assisted hinge is configured in such a way, that the cover can be attached to the trench by the at least one spring assisted hinge in an openable manner.

2. Cover according to claim 1, wherein the at least one spring assisted hinge is configured in such a way, that the cover can be attached to the trench by the at least one spring assisted hinge in a manner that it can be opened to 180°.

3. Cover according to claim 1 or 2, wherein the at least one spring assisted hinge comprises at least one torsion spring.

4. Cover according to claim 3, wherein the at least one spring assisted hinge comprises at least a first spring and a second spring, wherein the first spring has a different load rating than the second spring.

5. Cover according to one of claims 1 to 4, wherein the cover comprises an additional locking mechanism to lock the cover plate.

6. Cable management and shore power system, wherein the cable management system comprises at least one trench and at least one cover according to one of claims 1 to 5.

7. Cable management and shore power system according to claim 6, wherein the cable management system is a cable management system of an onshore power system.

8. Onshore power system, which comprises an onshore power supply, a cable management and shore power system according to claim 7 and a land-based, horizontally displaceable vehicle, on which a power supply line with a plug is disposed for supplying a ship with electrical energy, and wherein electric power from the power supply is supplied to the vehicle through the cable management and shore power system and the vehicle.
